# FASCICULE DE BREVET EUROPEEN

(11) **EP 3 108 959 B1**
(45) Date de publication et mention de la délivrance du brevet: **20.12.2017**
(21) Numéro de dépôt: 16175171.4
(22) Date de dépôt: 20.06.2016
(51) Int. Cl.: B01J 8/00

(54) **PROCÉDÉ DE VIDANGE COMPLÈTE D'UN RÉACTEUR CATALYTIQUE**
VERFAHREN ZUR VOLLKOMMENEN ENTLEERUNG EINES KATALYTISCHEN REAKTORS
METHOD FOR COMPLETE DRAINING OF A CATALYTIC REACTOR

(30) Priorité: 26.06.2015 FR 1555945
(43) Date de publication de la demande: 28.12.2016
(73) Titulaire: Eurecat S.A., 07800 La Voulte-sur-Rhône (FR)
(72) Inventeur: DARCISSAC, Jean, 07800 SAINT GEORGES LES BAINS (FR); THEVENET, Vincent, 26400 ALLEX (FR); VIAL, Romain, 69390 VERNAISON (FR); BERNARD, Lilian, 26200 MONTELIMAR (FR); DUFRESNE, Pierre, 26400 AOUSTE SUR SYE (FR)
(74) Mandataire: Casalonga

(56) Documents cités:
- WO-A1-94/20396
- WO-A1-2004/058572
- US-B1- 6 203 766
- US-B2- 7 959 870

## Description

La présente invention a pour objet un procédé qui permet de vidanger de manière complète un réacteur contenant des particules de catalyseur.

Le procédé selon l'invention est tout particulièrement approprié pour vider complètement un réacteur industriel des particules de catalyseur usé qu'il contient.

De nombreux procédés industriels notamment dans les domaines de la chimie, de la pétrochimie et du raffinage pétrolier, mettent en oeuvre des catalyseurs solides sous forme de particules de petite taille.

Ces particules de catalyseur sont en général disposées dans le réacteur sous forme d'un ou plusieurs lits (ou couches de catalyseurs) superposés, déposés chacun sur un plateau de support.

Au cours de son utilisation dans le réacteur, le catalyseur se désactive progressivement, et son activité diminue, de telle sorte qu'il doit être retiré du réacteur pour être remplacé par un nouveau catalyseur actif. Ainsi, les réacteurs industriels doivent être régulièrement arrêtés pour renouveler le ou les lits de catalyseur. Cette opération se déroule en deux temps : la vidange du réacteur de manière à en retirer le catalyseur usé, puis son rechargement en catalyseur actif. Ces deux opérations doivent être réalisées de manière la plus efficace et rapide possible, de manière à diminuer au maximum le temps d'arrêt du réacteur, pour des raisons économiques évidentes.

En outre, l'opération de vidange doit être complète, pour éliminer entièrement du réacteur l'intégralité du catalyseur usé. En effet, une vidange incomplète conduirait à laisser subsister du catalyseur usé dans le réacteur, au détriment du catalyseur actif, ce qui serait particulièrement préjudiciable au rendement de l'unité et n'est en pratique pas acceptable.

Toutefois, la vidange complète d'un réacteur industriel des particules de catalyseur usé qu'il contient est une opération délicate et problématique, pour diverses raisons.

En premier lieu, les particules de catalyseur usé ont tendance à être collantes et à s'agglomérer de manière plus ou moins forte les unes aux autres, ce qui complique substantiellement leur évacuation hors du réacteur.

En second lieu, le catalyseur usé contient souvent une phase active qui peut être réactive au contact de l'air, telle que par exemple les phases actives contenant des sulfures métalliques. En raison de la présence de ces composés, le catalyseur usé peut s'échauffer spontanément de manière brusque et importante, voire dans certains cas s'auto-enflammer au contact de l'air. La plupart des catalyseurs correspondants sont classifiés, selon une norme des Nations Unies, soit comme auto-échauffants, soit comme pyrophoriques.

La manipulation du catalyseur usé est donc délicate et peut être dangereuse, et la vidange du réacteur est généralement effectuée sous atmosphère inerte (le plus souvent de l'azote).

Pour vider un réacteur contenant des particules de catalyseur usées, plusieurs techniques sont connues dans l'art antérieur :

### - La vidange gravitaire :

Celle-ci s'effectue en ouvrant le ou les tubes de vidange latéraux situés en bas du réacteur (ou en bas de chaque lit de catalyseur pour un réacteur à plusieurs lits), de manière à permettre au catalyseur de s'écouler hors du réacteur sous l'action de son poids. Ceci permet dans les cas les plus favorables d'extraire 80 à 85 % du catalyseur usé contenu dans le réacteur.

Mais le catalyseur peut aussi être collant et mal s'écouler voire ne pas s'écouler du tout notamment lorsque des agglomérats de catalyseur usé se sont formés. Dans ce cas, il est nécessaire de recourir à différentes techniques de décolmatage du lit pour enclencher l'écoulement des particules de catalyseur.

Dans tous les cas, même les plus favorables, à la fin de l'opération de vidange gravitaire il reste dans le réacteur une quantité de catalyseur usé qui représente en général de 15 à 20 % en poids du lit de catalyseur initial, et qui correspond typiquement à l'angle naturel de talus de ce solide divisé. Ce reliquat de catalyseur dans le réacteur à la fin de la vidange gravitaire est communément appelé « dig out ».

Une intervention humaine est alors nécessaire pour évacuer le dig out : un opérateur descend dans le réacteur et évacue manuellement ce reliquat, par exemple avec une pelle, vers le tube de vidange. Cette opération présente un danger particulièrement important : le réacteur est sous azote, compte tenu du caractère auto-échauffant du catalyseur usé, et régulièrement des accidents mortels surviennent lors de ces opérations. Les industriels souhaitent donc aujourd'hui limiter, voire supprimer complètement, de telles interventions humaines à l'intérieur des réacteurs.

### - La vidange par aspiration :

Celle-ci s'effectue en général par le haut du réacteur. Le haut du réacteur est ouvert, sous balayage d'azote, le plateau distributeur de charge généralement présent au-dessus du lit est démonté, et le lit catalytique est aspiré au moyen d'un aspirateur industriel avec compensation d'azote.

La tête de l'aspirateur est généralement guidée par un opérateur pour vidanger le catalyseur couche par couche. Le solide et le gaz sont séparés via un cyclone. Cette technique, largement utilisée, présente divers inconvénients : un coût élevé ; une détérioration des particules de catalyseur, allant parfois jusqu'à ne pas permettre la régénération de celui-ci pour son utilisation ultérieure ; la présence dans le réacteur d'un opérateur, au moins pour les opérations de finition, ce qui engendre des problèmes de sécurité tels que décrits ci-avant.

Des exemples de ce type de technique sont décrits dans les documents US 7,959,870 et WO 2004/058572.

### - La vidange gravitaire sous eau :

Cette technique, plutôt expérimentale et moins couramment employée, permet d'éviter toute intervention humaine dans le réacteur sous atmosphère inerte. Elle consiste à remplir le réacteur d'eau et vidanger le mélange catalyseur/eau via les tubes de vidange latéraux situés en bas du réacteur.

Elle présente toutefois des inconvénients majeurs : elle génère beaucoup d'eau sale, et compromet la possibilité de régénérer ensuite le catalyseur usé en vue de sa réutilisation.

Il existe donc depuis longtemps un besoin important de disposer de solutions innovantes qui permettent de vider de manière complète, rapide, efficace et sûre, les réacteurs industriels des particules de catalyseur usé qu'ils contiennent.

La Demanderesse a maintenant découvert une nouvelle technique de vidange des réacteurs contenant des particules de catalyseur usé, qui permet de remédier aux inconvénients des méthodes de l'art antérieur.

La présente invention a pour objet un procédé pour vidanger un réacteur contenant au moins un lit de particules de catalyseur usé et qui comprend au moins un tube de vidange, qui débouche dans le réacteur en partie basse dudit lit de particules ou en dessous de celui-ci. Le procédé selon l'invention comprend les étapes successives suivantes :
- une première étape consistant à provoquer l'écoulement hors du réacteur d'une partie du lit de catalyseur via ledit tube de vidange, puis
- une seconde étape d'aspiration du reliquat de catalyseur, effectuée en aspirant les particules de catalyseur restant dans le réacteur à l'issue de la première étape au moyen d'une manche d'aspiration flexible introduite dans le réacteur via ledit tube de vidange et connectée à un système d'aspiration situé à l'extérieur du réacteur, ladite manche étant pourvue sur sa surface externe de protubérances et étant mobile en translation et en rotation par rapport audit tube de vidange.

La méthode selon l'invention permet de vider de manière particulièrement complète, efficace et rapide le réacteur de son chargement de catalyseur usé.

La méthode selon l'invention permet en outre d'éviter toute intervention humaine à l'intérieur du réacteur, et permet d'améliorer de manière très importante la sécurité des opérations de déchargement du catalyseur usé.

La méthode selon l'invention permet enfin de préserver les propriétés du catalyseur usé, et de limiter son endommagement lors de son déchargement, ce qui est essentiel lorsque le catalyseur doit ensuite être régénéré en vue d'une utilisation ultérieure.

La première étape de la méthode selon l'invention consiste à provoquer l'écoulement d'une partie de lit de catalyseur hors du réacteur au travers du tube de vidange, en ouvrant celui-ci.

Cette première étape est de préférence effectuée de manière gravitaire, c'est-à-dire en provoquant l'écoulement gravitaire hors du réacteur d'une partie du lit de catalyseur via ledit tube de vidange.

Par « écoulement gravitaire », on entend que le catalyseur s'écoule du réacteur au cours de la première étape sous l'action de son propre poids, et n'est ni poussé par des moyens mécaniques de poussée à l'intérieur du réacteur (par exemple, par un opérateur), ni aspiré hors du réacteur par des moyens d'aspiration des particules.

Il s'agit typiquement d'un écoulement gravitaire classique, tel que ceux connus dans l'art antérieur.

L'écoulement peut également être assisté, c'est-à-dire qu'au cours de la première étape sont mis en oeuvre des moyens permettant de faciliter la sortie du catalyseur hors du réacteur, par exemple au moyen d'injection dans le réacteur de gaz sous pression.

Par ailleurs, notamment dans les cas où l'écoulement de catalyseur ne se produit pas spontanément lors de l'ouverture du tube de vidange, l'on peut, immédiatement avant la première étape, recourir à des moyens de désagglomération du lit de catalyseur. De tels moyens sont connus dans l'art antérieur. Il peut d'agir en particulier d'une injection de gaz sous pression (typiquement, du CO₂ sous pression). Ces moyens permettent de faire démarrer l'écoulement des particules de catalyseur, après quoi le catalyseur, dans le cas d'un écoulement gravitaire, est laissé s'écouler sous la seule action de son poids.

Ainsi, selon un mode de réalisation de l'invention, ladite première étape est précédée d'une étape préliminaire de désagglomération du catalyseur, qui est de préférence réalisée en injectant dans le lit de catalyseur un gaz inerte sous pression tel que du dioxyde de carbone ou de l'azote.

La présente invention s'applique aux réacteurs qui sont pourvus d'au moins un tube de vidange, qui débouche dans le réacteur en partie basse du lit de particules ou en dessous de celui-ci.

Le tube de vidange peut être horizontal, ou incliné vers le bas. De préférence, il est incliné vers le bas. Dans ce cas, le tube de vidange présente de préférence un angle d'inclinaison par rapport à la verticale allant de 0 à 75 degrés, plus préférentiellement 10 à 60 degrés.

Au cours de la première étape du procédé selon l'invention une partie généralement substantielle du lit de catalyseur usé est extraite du réacteur, typiquement supérieure à 50% en poids du lit initial, et en général allant de 60 à 95% en poids du lit initial de catalyseur, plus particulièrement de 70 à 90% en poids du lit initial de catalyseur.

Le reliquat de catalyseur (ou « dig out ») est ensuite éliminé complètement du réacteur au moyen de la seconde étape du procédé de l'invention.

Cette seconde étape met en oeuvre une manche d'aspiration flexible, que l'on introduit sur une partie de sa longueur dans le réacteur via le tube de vidange, une fois la première étape terminée.

L'extrémité de la manche située à l'extérieur du réacteur est connectée à un dispositif d'aspiration, ce qui permet d'aspirer le reliquat de catalyseur qui pénètre dans la manche via l'extrémité de celle-ci qui est introduite dans le réacteur.

Ainsi, au cours de cette seconde étape, le reliquat de catalyseur usé est totalement aspiré en partie basse du lit de catalyseur, via la manche d'aspiration selon l'invention.

Selon la présente invention, la manche est mobile à l'intérieur du réacteur en translation et en rotation par rapport audit tube de vidange. Cela signifie que l'on peut la pousser plus ou moins profondément à l'intérieur du réacteur grâce à des moyens de poussée de la manche, et qu'elle peut tourner sur elle-même grâce à des moyens de rotation de la manche.

A cet effet, des moyens de guidage de la manche sont avantageusement présents à l'extérieur du réacteur pour permettre de déplacer ladite manche. Des moyens de guidage appropriés sont par exemple constitués d'au moins deux moteurs qui permettent de déplacer la manche l'un en translation et l'autre en rotation par rapport au tube de vidange.

Les moyens de guidage de la manche peuvent être fixés sur la manche et/ou au réacteur grâce à un système d'attache vissé au tube de vidange.

Ces moyens de guidage peuvent être pilotés de manière manuelle, automatique ou semi-automatique.

Lorsque le pilotage des moyens de guidage de la manche est manuel, un opérateur à l'extérieur du réacteur contrôle les déplacements de la manche à l'intérieur du réacteur en actionnant ces moyens de guidage.

Lorsque le pilotage des moyens de guidage de la manche est automatique, les moyens de guidage sont contrôlés par un ordinateur qui exécute un programme de déplacement de la manche à l'intérieur du réacteur. Le programme de déplacement peut être prédéfini, c'est-à-dire que les déplacements de la manche au cours de la seconde étape ont été calculés au préalable, de manière à optimiser l'aspiration du « dig out ». Le programme de déplacement peut également être conçu de manière à organiser un déplacement aléatoire de la manche à l'intérieur du réacteur.

Le pilotage des moyens de guidage de la manche peut également être semi-automatique, c'est-à-dire contrôlé en partie via un programme d'ordinateur, et en partie par un opérateur.

En outre, selon un mode de réalisation particulièrement avantageux de l'invention, des moyens de détection de la position de la manche sont présents dans le réacteur. De tels moyens permettent de connaitre à tout moment la position exacte de la manche dans le réacteur, et le cas échéant, d'optimiser ses déplacements.

Ces moyens de détection peuvent comprendre un logiciel de calcul, qui détermine au fur et à mesure la position de la manche dans le réacteur compte tenu des déplacements réalisés (simulation de la position de l'appareil via un logiciel compilant les données de pilotage pour en déduire la position).

D'autres moyens de détection incluent par exemple des systèmes de détection par niveau radar ou par niveau à ultrasons ; des systèmes mettant en oeuvre un ou plusieurs accéléromètres, un ou plusieurs GPS ; des systèmes de vision par une ou plusieurs caméras.

Selon un mode de réalisation préféré, lesdits moyens de détection comprennent une ou plusieurs caméra(s), qui permet(tent) de visualiser la position de la manche dans le réacteur. Une telle caméra peut être par exemple positionnée sur la paroi interne du réacteur et/ou sur la manche elle-même. Divers types de caméras peuvent être employés à cet effet, incluant notamment des caméras à vision nocturne, des caméras infrarouges.

Une telle caméra peut en outre permettre si besoin de localiser les reliquats de catalyseur, et de piloter en conséquence les déplacements de la manche aspirante.

La manche d'aspiration employée dans la présente invention est pourvue sur sa surface externe de protubérances. Ces dernières permettent à la manche d'accrocher la surface du reliquat de catalyseur (dig out), et ainsi de réaliser des déplacements latéraux de la manche à la surface de celui-ci en provoquant une simple rotation de la manche, c'est-à-dire en la faisant tourner sur elle-même : grâce aux protubérances, la manche s'accroche à la surface du reliquat de catalyseur, et se déplace en roulant sur celui-ci. Les protubérances permettent également à la manche de gratter la surface du reliquat de catalyseur et de faciliter ainsi le décrochage du catalyseur et son aspiration par l'extrémité de ladite manche.

Ces protubérances peuvent avoir des formes très diverses. Elles peuvent comprendre par exemple, et de manière non limitative, des cannelures, des dentelures plus ou moins arrondies ou au contraire pointues, des bosses, des protubérances en forme de boudins, d'ergots, de piques, de pointes ou de clous.

Elles peuvent être disposées de manière régulière ou irrégulière sur la surface externe de la manche d'aspiration. Elles peuvent être présentes sur toute la longueur de la manche d'aspiration introduite dans le réacteur, ou sur une partie de celle-ci, par exemple seulement au niveau de la tête d'aspiration de la manche.

Par « manche » on désigne de manière connue en soi un conduit creux. La manche selon l'invention est flexible, c'est-à-dire déformable et notamment apte à se déformer en flexion. Pour cela, la manche d'aspiration est constituée d'un matériau déformable tel qu'un matériau polymérique par exemple un polymère renforcé, ou un matériau métallique souple.

Selon un mode de réalisation particulièrement avantageux, l'extrémité de la manche introduite dans le réacteur (c'est-à-dire, la tête d'aspiration de la manche) est coudée, par exemple en forme de « nez crochu ». Une telle forme permet de faciliter l'aspiration des particules de catalyseur au détriment de l'atmosphère du réacteur.

Dans le cas où le réacteur comprend plusieurs lits de catalyseur, chaque lit peut être vidangé au moyen de la méthode selon l'invention. Cela nécessite la présence sur le réacteur d'au moins un tube de vidange au bas de chaque lit de catalyseur.

Lorsque le catalyseur usé à retirer du réacteur est réactif à l'air, par exemple lorsqu'il possède un caractère auto-échauffant, le procédé selon la présente invention est typiquement effectué en mettant puis en maintenant le réacteur sous gaz inerte, c'est-à-dire que le catalyseur qui est retiré du réacteur au cours des deux étapes selon l'invention est progressivement remplacé par un gaz inerte, tel que par exemple de l'azote. Cette introduction de gaz inerte dans le réacteur au fur et à mesure de la vidange de celui-ci, peut être effectuée par exemple par le haut ou par le bas du réacteur.

La présente invention va maintenant être illustrée plus en détail et de manière non limitative, à l'aide des figures annexées dans lesquelles :
- la Figure 1 illustre la mise en oeuvre de la première étape du procédé selon l'invention dans un réacteur industriel contenant un lit de catalyseur usé,
- la Figure 2 montre le même réacteur, à l'issue de la première étape,
- la Figure 3 illustre la mise en oeuvre de la seconde étape du procédé selon l'invention, dans le même réacteur,
- les Figures 4 à 7 illustrent des exemples de structure protubérances, susceptibles d'être présentes à la surface de la manche d'aspiration.

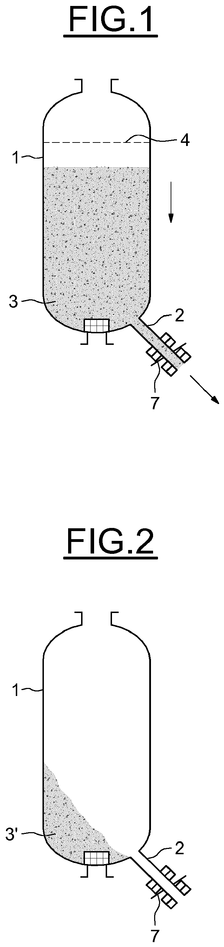

La Figure 1 montre un réacteur industriel 1 du type des colonnes, contenant un lit 3 de particules de catalyseur usé. Le réacteur 1 comprend un tube de vidange 2 incliné vers le bas, avec un angle d'inclinaison par rapport à la verticale d'environ 45 degrés. Le tube 2 débouche dans le réacteur 1 en partie basse du lit 3 de particules.

Pour permettre la mise en oeuvre de la première étape du procédé selon l'invention, le tube de vidange 2 a été ouvert en ouvrant la vanne de vidange 7, de telle sorte que les particules de catalyseur s'écoulent hors du réacteur 1 par écoulement gravitaire, via le tube 2.

Les pointillés 4 montrent le niveau supérieur initial du lit de catalyseur 3 avant le déclenchement de l'écoulement gravitaire, et les flèches sur la Figure 1 montrent le sens de l'écoulement du catalyseur.

La Figure 2 illustre le même réacteur 1 à la fin de la première étape de vidange gravitaire, et montre qu'à l'issue de cette étape il reste dans le réacteur 1 un reliquat 3' de catalyseur usé qui représente ici environ 15% en poids du lit de catalyseur initial, et qui correspond à l'angle naturel de talus de l'amas de particules de catalyseur. Le reliquat 3' de catalyseur correspond au « dig out » qui ne peut pas être éliminé par simple vidange gravitaire.

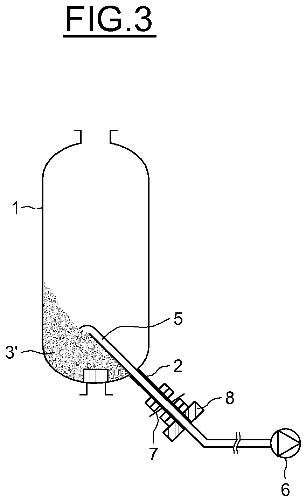

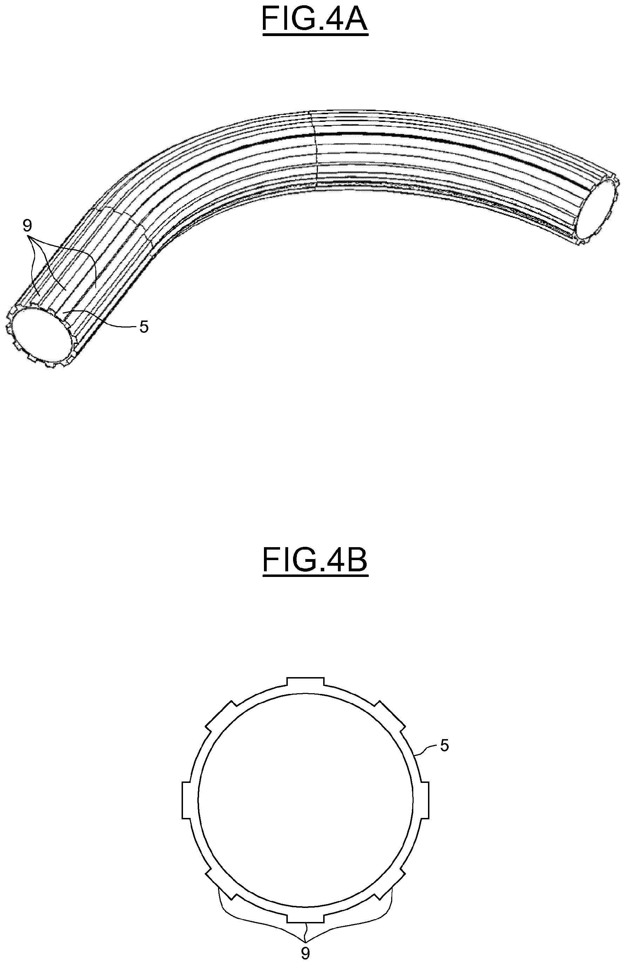

Comme illustré dans la Figure 3, conformément à la seconde étape du procédé selon l'invention, le reliquat 3' de catalyseur est ensuite aspiré hors du réacteur 1 au moyen d'une manche d'aspiration flexible 5 introduite dans le réacteur 1 via le tube de vidange 2. L'extrémité de la manche 5 introduite dans le réacteur, c'est-à-dire la tête d'aspiration de la manche, est coudée. Les protubérances présentes à la surface de la manche 5 ne sont pas visibles à l'échelle de la Figure 3, mais peuvent être en particulier telles que décrites dans les Figures 4 à 7 ci-après.

La manche 5 est connectée à un système d'aspiration 6 situé à l'extérieur du réacteur. De plus, la manche 5 est mobile en translation par rapport à l'axe de symétrie du tube de vidange 2, et mobile en rotation par rapport à ce même axe. Pour cela, un système 8 d'entraînement en translation et en rotation de la manche (par exemple, un couple de moteurs), est fixé sur la bride en sortie du tube de vidange 2.
Les Figures 4 à 7 illustrent des exemples non limitatifs de structure protubérances, susceptibles d'être présentes à la surface de la manche d'aspiration 5.
La Figure 4a montre un mode de réalisation dans lequel la manche 5 est pourvue sur sa surface externe de cannelures 9. La Figure 4b montre une coupe en section transversale de la manche 5.

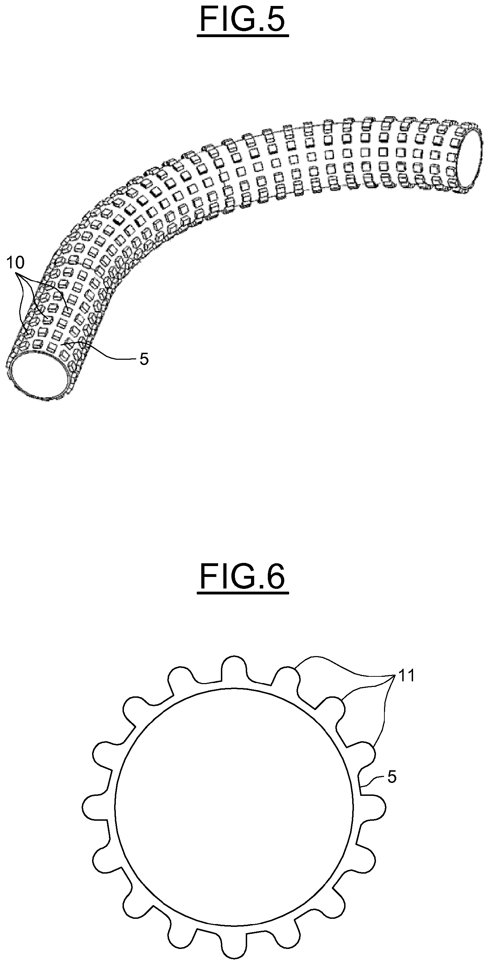

La Figure 5 montre un mode de réalisation dans lequel la manche 5 est pourvue sur sa surface externe d'un ensemble de bosses 10 en forme de crampons, par exemple régulièrement disposées à la surface de la manche.
La Figure 6 montre une coupe en section transversale de la manche 5, et illustre un mode de réalisation dans lequel la manche 5 est pourvue sur sa surface externe de dentelures 11 ayant une forme arrondie, mais qui pourrait également être pointue, ou encore une forme de crochets.

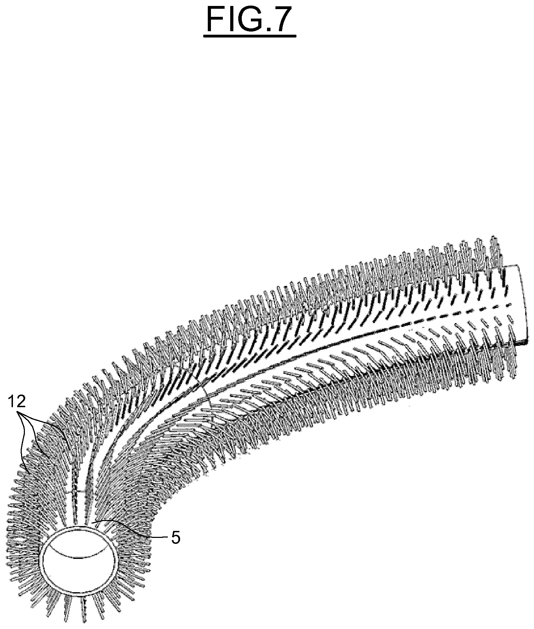

La Figure 7 montre un mode de réalisation dans lequel la manche 5 est pourvue sur sa surface externe d'un ensemble de protubérances 12 en forme d'ergots ou de piques, régulièrement disposées à la surface de la manche.

## Revendications

1. Procédé pour vidanger un réacteur (1) contenant au moins un lit (3) de particules de catalyseur usé et comprenant au moins un tube de vidange (2), qui débouche dans le réacteur (1) en partie basse dudit lit (3) de particules ou en dessous de celui-ci, le procédé comprenant les étapes successives suivantes :
- une première étape consistant à provoquer l'écoulement hors du réacteur d'une partie du lit (3) de catalyseur via ledit tube de vidange (2), puis
- une seconde étape d'aspiration du reliquat (3') de catalyseur, effectuée en aspirant les particules de catalyseur restant dans le réacteur (1) à l'issue de la première étape au moyen d'une manche d'aspiration flexible (5) introduite dans le réacteur via ledit tube de vidange et connectée à un système d'aspiration (6) situé à l'extérieur du réacteur, ladite manche (5) étant pourvue sur sa surface externe de protubérances et étant mobile, à l'intérieur du réacteur, en translation et en rotation par rapport audit tube de vidange (2).

2. Procédé selon la revendication 1, **caractérisé en ce que** la première étape est effectuée de manière gravitaire, en provoquant l'écoulement gravitaire hors du réacteur d'une partie du lit (3) de catalyseur via ledit tube de vidange (2).

3. Procédé selon l'une quelconque des revendications précédentes, **caractérisé en ce que** au cours de la première étape, la partie du lit (3) de catalyseur usé extraite du réacteur est supérieure à 50% en poids du lit initial, de préférence va de 60 à 95% en poids du lit de catalyseur initial, plus préférentiellement de 70 à 90% en poids du lit de catalyseur initial.

4. Procédé selon l'une quelconque des revendications précédentes, **caractérisé en ce que** au cours de la seconde étape la manche (5) est déplacée par des moyens de guidage (8) disposés à l'extérieur du réacteur (1).

5. Procédé selon la revendication précédente, **caractérisé en ce que** les moyens de guidage de la manche (5) sont pilotés de manière manuelle, automatique ou semi-automatique.

6. Procédé selon l'une quelconque des revendications précédentes, **caractérisé en ce que** des moyens de détection de la position de la manche (5) sont présents dans le réacteur.

7. Procédé selon la revendication précédente, **caractérisé en ce que** lesdits moyens de détection comprennent une ou plusieurs caméra(s), positionnée(s) sur la paroi interne du réacteur (1) et/ou sur la manche (5).

8. Procédé selon l'une quelconque des revendications précédentes, **caractérisé en ce que** les protubérances à la surface de la manche (5) comprennent des cannelures (9), des dentelures (11) plus ou moins arrondies ou pointues, des bosses (10), ou des protubérances en forme de boudins, d'ergots, de piques(12), de pointes ou de clous.

9. Procédé selon l'une quelconque des revendications précédentes, **caractérisé en ce que** les protubérances sont présentes sur toute la longueur de la manche d'aspiration (5) introduite dans le réacteur, ou sur une partie de celle-ci, par exemple seulement au niveau de la tête d'aspiration de la manche.

10. Procédé selon l'une quelconque des revendications précédentes, **caractérisé en ce que** l'extrémité de la manche (5) introduite dans le réacteur est coudée.

11. Procédé selon l'une quelconque des revendications précédentes, **caractérisé en ce que** le tube de vidange (2) est horizontal ou incliné vers le bas.

12. Procédé selon la revendication précédente, **caractérisé en ce que** le tube de vidange (2) est incliné vers le bas, avec un angle d'inclinaison par rapport à la verticale allant préférentiellement de 0 à 75 degrés, plus préférentiellement 10 à 60 degrés.

13. Procédé selon l'une quelconque des revendications précédentes, **caractérisé en ce que** ladite première étape est précédée d'une étape préliminaire de désagglomération du catalyseur, réalisée en injectant dans le lit de catalyseur (3) un gaz inerte sous pression tel que du dioxyde de carbone ou de l'azote.

## Patentansprüche

1. Verfahren zum Entleeren eines Reaktors (1), der mindestens ein Bett (3) aus verbrauchten Katalysatorpartikeln enthält und mindestens ein Entleerungsrohr (2) umfasst, das in den Reaktor (1) im unteren Teil des Betts (3) aus Partikeln oder unter diesem mündet, wobei das Verfahren die folgenden aufeinander folgenden Schritte umfasst:
- einen ersten Schritt, der darin besteht, das Abfließen eines Teils des Katalysatorbetts (3) über das Entleerungsrohr (2) aus dem Reaktor zu bewirken, dann
- einen zweiten Schritt des Absaugens des Überrestes (3') des Katalysators, das dadurch erfolgt, dass die nach dem ersten Schritt im Reaktor (1) verbliebenen Katalysatorpartikel mittels einer flexiblen Absaughülse (5), die über das Entleerungsrohr in den Reaktor eingeführt wird und mit einem außerhalb des Reaktors befindlichen Absaugsystem (6) verbunden ist, abgesaugt werden, wobei die Hülse (5) auf ihrer Außenseite mit Vorsprüngen versehen ist und dazu in der Lage ist, sich im Reaktor bezüglich des Entleerungsrohrs (2) translatorisch und drehbar zu bewegen.

2. Verfahren nach Anspruch 1, **dadurch gekennzeichnet, dass** der erste Schritt schwerkraftmäßig erfolgt, indem das schwerkraftmäßige Abfließen eines Teils des Katalysatorbetts (3) über das Entleerungsrohr (2) aus dem Reaktor bewirkt wird.

3. Verfahren nach einem der vorhergehenden Ansprüche, **dadurch gekennzeichnet, dass** während des ersten Schritts der Teil des verbrauchten Katalysatorbetts (3), der aus dem Reaktor entnommen wird, mehr als 50 Gew.-% des Ausgangsbetts, bevorzugt 60 bis 95 Gew.-% des Ausgangskatalysatorbetts und noch bevorzugter 70 bis 90 Gew.-% des Ausgangskatalysatorbetts beträgt.

4. Verfahren nach einem der vorhergehenden Ansprüche, **dadurch gekennzeichnet, dass** während des zweiten Schritts die Hülse (5) durch außerhalb des Reaktors (1) angeordnete Führungsmittel (8) verschoben wird.

5. Verfahren nach dem vorhergehenden Anspruch, **dadurch gekennzeichnet, dass** die Mittel zum Führen der Hülse (5) manuell, automatisch oder halbautomatisch angesteuert werden.

6. Verfahren nach einem der vorhergehenden Ansprüche, **dadurch gekennzeichnet, dass** im Reaktor Mittel zum Detektieren der Position der Hülse (5) vorhanden sind.

7. Verfahren nach dem vorhergehenden Anspruch, **dadurch gekennzeichnet, dass** die Mittel zum Detektieren eine oder mehrere Kameras umfassen, die an der Innenwand des Reaktors (1) und/oder an der Hülse (5) angeordnet sind.

8. Verfahren nach einem der vorhergehenden Ansprüche, **dadurch gekennzeichnet, dass** die Vorsprünge auf der Fläche der Hülse (5) Keilverzahnungen (9), Kerbverzahnungen (11) mit variierender Abrundung oder Zuspitzung, Buckel (10) oder Vorsprünge in Form von Wülsten, Stiften, Spitzen (12), Zinken oder Nägeln umfassen.

9. Verfahren nach einem der vorhergehenden Ansprüche, **dadurch gekennzeichnet, dass** die Vorsprünge auf der gesamten Länge der Saughülse (5), die in den Reaktor eingeführt ist, oder auf einem Teil davon, beispielsweise lediglich am Saugkopf der Hülse, vorliegen.

10. Verfahren nach einem der vorhergehenden Ansprüche, **dadurch gekennzeichnet, dass** das in den Reaktor eingeführte Ende der Hülse (5) gebogen ist.

11. Verfahren nach einem der vorhergehenden Ansprüche, **dadurch gekennzeichnet, dass** das Entleerungsrohr (2) horizontal oder nach unten geneigt ist.

12. Verfahren nach dem vorhergehenden Anspruch, **dadurch gekennzeichnet, dass** das Entleerungsrohr (2) nach unten geneigt ist, mit einem Neigungswinkel in Bezug auf die Vertikale von bevorzugt 0 bis 75 Grad und noch bevorzugter 10 bis 60 Grad.

13. Verfahren nach einem der vorhergehenden Ansprüche, **dadurch gekennzeichnet, dass** dem ersten Schritt ein Vorabschritt zur Deagglomeration des Katalysators vorausgeht, der ausgeführt wird, indem in das Katalysatorbett (3) ein Inertgas wie Kohlendioxid oder Stickstoff unter Druck eingespritzt wird.

## Claims

1. Method for emptying a reactor (1) containing at least one bed (3) of spent catalyst particles and comprising at least one dump tube (2), which opens into the reactor (1) at the bottom of the said bed (3) of particles or underneath the latter, the method comprising the following successive steps:
- a first step consisting in causing a proportion of the bed (3) of catalyst to flow out of the reactor via the said dump tube (2), then
- a second step of extracting the vestiges (3') of catalyst, which is performed by sucking up the particles of catalyst remaining in the reactor (1) at the end of the first step, using a flexible extraction sleeve (5) introduced into the reactor via the said dump tube and connected to an extraction system (6) situated outside the reactor, the said sleeve (5) being provided on its external surface with protuberances and being able to move, inside the reactor, translationally and rotationally with respect to the said dump tube (2).

2. Method according to Claim 1, **characterized in that** the first step is performed under gravity, by causing a proportion of the bed (3) of catalyst to flow out of the reactor under gravity via the said dump tube (2).

3. Method according to either one of the preceding claims, **characterized in that** during the course of the first step, the proportion of the bed (3) of spent catalyst extracted from the reactor is greater than 50 wt% of the initial bed and preferably ranges from 60 to 95 wt% of the initial catalyst bed, more preferentially from 70 to 90 wt% of the initial catalyst bed.

4. Method according to any one of the preceding claims, **characterized in that** during the course of the second step, the sleeve (5) is moved by guide means (8) located outside the reactor (1).

5. Method according to the preceding claim, **characterized in that** the means of guiding the sleeve (5) are controlled manually, automatically or semiautomatically.

6. Method according to any one of the preceding claims, **characterized in that** means of detecting the position of the sleeve (5) are present inside the reactor.

7. Method according to the preceding claim, **characterized in that** said detection means comprise one or more camera(s) positioned on the internal wall of the reactor (1) and/or on the sleeve (5).

8. Method according to any one of the preceding claims, **characterized in that** the protuberances at the surface of the sleeve (5) comprise splines (9), teeth (11) of varying degrees of roundedness or pointedness, brushes (10), or elongated cylindrical protuberances, spurs, pins (12), spikes or nails.

9. Method according to any one of the preceding claims, **characterized in that** the protuberances are present over the entire length of the extraction sleeve (5) introduced into the reactor, or over a part of its length, for example only in the region of the suction head of the sleeve.

10. Method according to any one of the preceding claims, **characterized in that** the end of the sleeve (5) introduced into the reactor is curved.

11. Method according to any one of the preceding claims, **characterized in that** the dump tube (2) is horizontal or inclined downwards.

12. Method according to the preceding claim, **characterized in that** the dump tube (2) is inclined downwards, with an angle of inclination with respect to the vertical ranging preferably from 0 to 75 degrees, more preferably 10 to 60 degrees.

13. Method according to any one of the preceding claims, **characterized in that** the said first step is preceded by a preliminary step of deagglomerating the catalyst, performed by injecting a pressurized inert gas such as carbon dioxide or nitrogen into the bed of catalyst (3).
